Europäisches Patentamt

(19) European Patent Office

Office européen des brevets

(11) EP 0 722 774 A1

## (12) EUROPEAN PATENT APPLICATION

(43) Date of publication:
24.07.1996 Bulletin 1996/30

(51) Int. Cl.$^6$: **B01J 20/06**, B01D 53/52, C10K 1/30, C10K 1/32

(21) Application number: 96200112.9

(22) Date of filing: 18.01.1996

(84) Designated Contracting States:
BE DE DK ES FR GB GR IT NL PT SE

(30) Priority: 20.01.1995 EP 95200143

(71) Applicant: N.V. Kema
NL-6800 ET Arnhem (NL)

(72) Inventors:
• Janssen, Frans J.J.G.
NL-6814 KV Arnhem (NL)

• Meijer, Ronald
NL-6845 CD Arnhem (NL)

(74) Representative: Land, Addick Adrianus Gosling
Arnold & Siedsma,
Advocaten en Octrooigemachtigden,
Sweelinckplein 1
2517 GK Den Haag (NL)

(54) **Method for desulfurizing a gas stream and absorbent suitable for this method**

(57) The invention relates to a process for removing sulfur containing compounds such as $H_2S$ and COS from a gas stream, comprising contacting the gas stream with an absorbent in a fluidized bed, which absorbent is based on at least one oxide of a first metal selected from the group consisting of Mn, Fe, Co, Ni, Cu and Zn, in combination with at least one oxide of a second metal selected from the group consisting of Cr, Mo and W on a carrier selected from the group consisting of $Al_2O_3$, $TiO_2$, or $ZrO_2$ or mixtures thereof, said absorbent being in the form of particles.

## Description

The present invention relates to a method for desulfurizing a gas stream and to an absorbent suitable for this process.

The need to remove sulfur compounds, especially hydrogen sulfide, from gas streams in chemical processes is known.

In the gasification of coal or heavy oil fractions or biomass and all types of waste, hydrogen sulfide formation occurs. Due to the corrosive nature of hydrogen sulfide and to the fact that this is poisonous for catalysts which are used to convert gases into useful compounds, this hydrogen sulfide has to be removed. Furthermore if $H_2S$ is not removed from these gases, $SO_2$ formation can occur which if released is environmentally dangerous. There are a great number of methods known for the removal of hydrogen sulfide from gas streams in fixed beds. The Dutch patent applications 9202282 and 9202283 both describe a method for desulfurizing of a gas in a fixed bed reactor by means of absorbents not suitable for fluidized beds.

The object of the present invention is to provide a fluidized bed process for the removal of sulfur containing compounds from a gas stream by an absorbent, which absorbent substantially does not suffer from attrition.

The present invention therefore provides a process for removing sulfur containing compounds such as $H_2S$ and COS from a gas stream, comprising contacting a gas stream with an absorbent in a fluidized bed reactor, which absorbent is based on at least one oxide of a first metal selected from the group consisting of Mn, Fe, Co, Ni, Cu and Zn, in combination with at least one oxide of a second metal, selected from the group consisting of Cr, Mo and W on a carrier selected from a group consisting of $Al_2O_3$, $TiO_2$, or $ZrO_2$ or mixtures thereof, said absorbent being in the form of particles, having a particle size of 0.1 - 5 mm and wherein the absorbent has a specific surface of 100-500 $m^2$/g.

By this process, very good absorption of hydrogen sulfide is achieved together with the advantages yielded by carrying out the desulfurizing process in a fluidized bed reactor, which offers a better mixing of the gas and absorbent and therefore better contact therebetween than is the case with fixed bed reactors.

This absorbent also yields the advantage that attrition thereof is almost zero during the desulfurizing process in a fluidized bed reactor.

The combination of the first metal oxide and the second metal oxide on the carrier, absorbs and converts hydrogen sulfide very well with a high loading degree, whereby the metal oxides are transformed into metal sulfides.

Besides this, the absorbents are able to be regenerated to substantially their original capacity.

The particle size of the absorbent preferably lies in the range of 0.1-5 mm.

The specific surface area of the absorbent preferably lies between 100 and 500 $m^2$/g.

The sum of the metal oxides on the carrier preferably lies between 0.01 and 50 wt.-% and most preferably between 10 and 30 wt.-%.

The absorbent, when loaded, is preferably regenerated with an oxidising gas stream in a fluidised bed reactor and then recirculated. The gas stream preferably comprises $SO_2$ and oxygen whereby the metal sulfide is regenerated to the metal oxide during oxidation to release sulfur vapor. This yields the advantage that the formation of corrosive sulfate is prevented.

The process is preferably carried out at a temperature range between 200 and 700°C and at a pressure of between 0.1-5.0 MPa.

The above conditions provide for an optimum process.

According to a second aspect of the present invention, there is provided an absorbent suitable for absorbing sulfur compounds in the above mentioned fluidized bed process.

According to a third aspect of the present invention there is provided a process for preparing the above mentioned absorbent comprising the sequential impregnation of the first metal oxide and the second metal oxide on the carrier.

The impregnation of the first metal oxide is preferably a two stage treatment in order to effectively impregnate the carrier. For the preparation of the absorbent, metal nitrate, citrate or acid solutions calculated to yield a predetermined metal oxide content in the absorbent, can be used, the order of deposition being unimportant for the working of the absorbent.

The absorbent according to the present invention is classified as a D-powder, based on the particle diameter and density.

A D-powder is defined as having the following fluidisation properties:

- bubbles coalesce rapidly and grow to large size;
- bubbles rise more slowly than the rest of the gas percolating through the emulsion;
- the dense phase has a low voidage (porosity);
- when the bubble size approaches the bed diameter, flat slugs are observed;
- these solid spout easily;
- a large amount of gas is needed to fluidise these solids.

The invention will now be further illustrated by means of non-limiting examples.

**EXAMPLE 1:**

**Experimental procedure**

1. preparation of a 12 wt.-% $Fe_2O_3$, 12 wt.-% $MoO_3$ on an $Al_2O_3$ absorbent

The $Al_2O_3$ carrier material was calcined at 1100 K and cooled down to room temperature. Iron nitrate solution, calculated to yield an $Fe_2O_3$ content in the absorbent of 6 wt.-%, was impregnated under vacuum on the carrier material at a pH of less than 3.5. This was then heated in air to 500°C whereafter calcination at this temperature followed for two hours. Following this, the carrier and iron compound were cooled down to room temperature and evacuated for 30 minutes.

Impregnation under vacuum of a further iron nitrate solution, calculated to yield an $Fe_2O_3$ content of 12 wt.-% was then carried out at a pH of less than 3.5. The absorbent was then heated in air to 500°C, whereafter calcination followed at this temperature for two hours. The absorbent was then cooled to room temperature and evacuated for 30 minutes, whereafter impregnation was carried out under vacuum of 80-90% of the pore volume with ammonium heptamolybdate solution of molybdenum acid calculated to yield a $MoO_3$ content of 12 wt.-% in the absorbent. The absorbent was then heated in air to 500°C whereafter calcination followed at this temperature for two hours. Finally the absorbent was cooled to room temperature.

**EXAMPLE 2:**

Desulfurizing of a gas stream in a fluidized bed reactor

An absorbent was used which consisted, as above, of $Fe_2O_3$ and $MoO_3$, with an atomic Fe/Mo ratio of 1.80 carried on an $Al_2O_3$ carrier wherein the wt.-% of the $Fe_2O_3$, $MoO_3$ respectively were 12 on the carrier.

The absorbent has a particle size of about 1 mm and a specific surface of 140 $m^2$/g, Brunauer Emmett Teller (BET).

Ten absorption/regeneration cycles were carried out in a fluidized bed reactor. The experimental conditions under which these tests were carried are summarized in table 1.

Table 1

| Experimental conditions of example 2 | | | | | | | | | | | |
|---|---|---|---|---|---|---|---|---|---|---|---|
| | p (Mpa) | T (°C) | Gas flow L.min$^{-1}$ | Gas composition (volume per cent) | | | | | | | |
| | | | | $O_2$ | $N_2$ | $N_2$/Ar | $H_2S$ | $H_2O$ | CO | $H_2$ | $CO_2$ |
| Absorption | 0.4 | 350 | 85 | - | - | 2.7 | 0.075/0.3 | 5 | 60 | 30 | 2 |
| Regeneration | 0.4 | 600 | 85 | 1 | 99 | - | - | - | - | - | - |

COS was present at the entry to the absorbent bed, due to the thermodynamic equilibrium of the reaction

$$CO + H_2S \rightleftharpoons \rightarrow COS \text{ and } H_2.$$

The absorbent was introduced into the reaction bed whereafter the reactor was raised to a temperature of 350°C. Thereafter an $H_2S$ containing gas stream was introduced into the reactor. The sulfur components $H_2S$ and COS reacted with the absorbent to produce metal sulfides. Maximum absorption was indicated when the sulfur containing components passed unhindered through the reactor.

After absorption, regeneration of the absorbent took place. An oxygen containing gas mixture was guided over the absorbent whereby the metal sulfides reacted with the oxygen and $SO_2$ to produce $SO_2$ and sulfur vapor and the absorbent was regenerated.

The absorption bed and regeneration bed were aligned in series.

**Results of Example 2:**

Absorption

During the absorption of $H_2S$, $Fe_2O_3$ and $MoO_3$ were transformed into FeS and $MoS_2$ respectively.

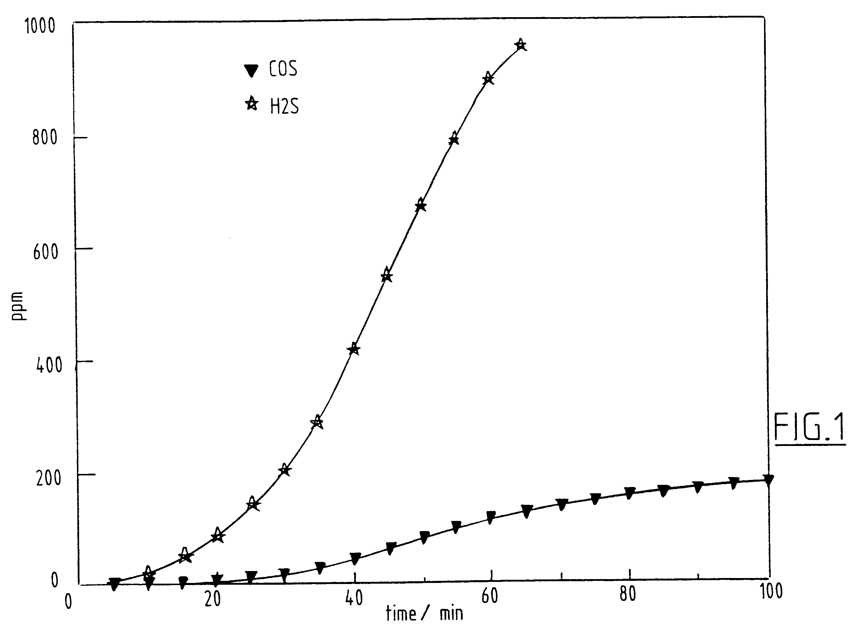

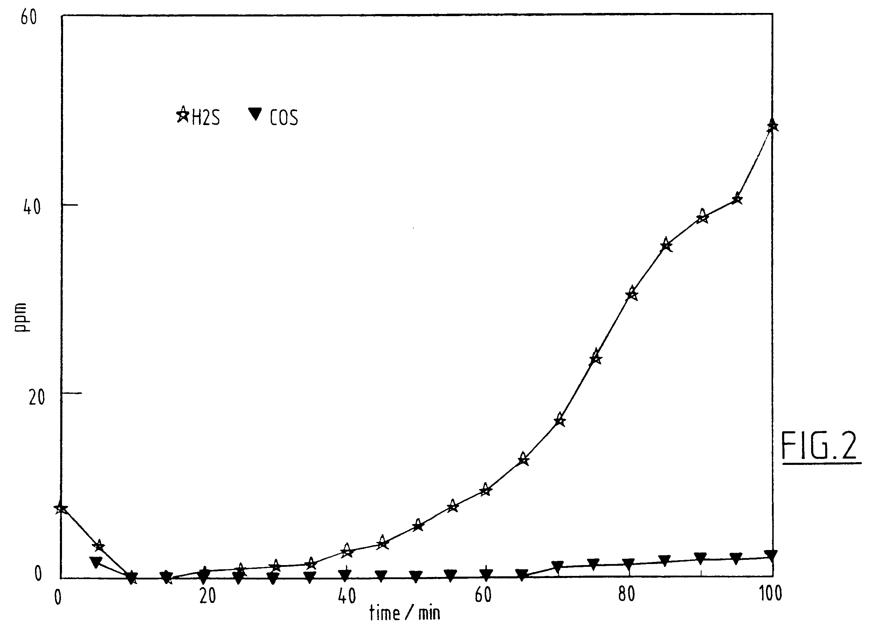

Figures 1 and 2 show the $H_2S$ and COS breakthrough curves, which were measured during absorption with an $H_2S$ entry concentration of 3000 and 750 ppm, respectively.

During the absorption/regeneration cycles, a little spreading of the $H_2S$ and COS break through curves was observed. No significant deactivation of the absorbent was observed.

The removal of 3000 ppm $H_2S$ during a time period of 40 minutes, corresponded with a sulfur loading on the absorbent of 4 wt.-% sulfur.

A degree of sulfur removal greater than 99.0% at 750 ppm $H_2S$ was realized. This corresponds to a sulfur uptake capacity of ± 5 wt.-% sulfur.

Regeneration

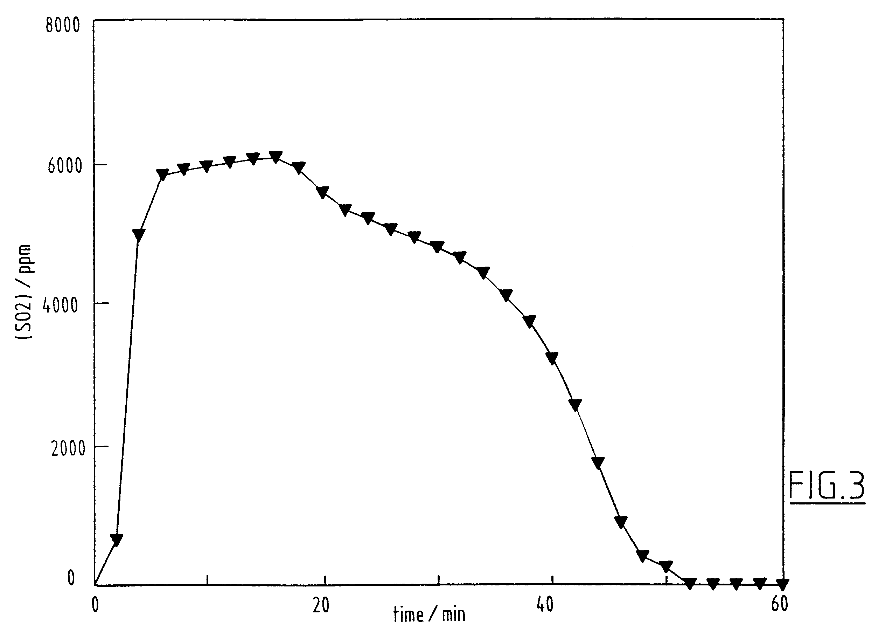

Figure 3 shows the $SO_2$ formation as a function of time for regeneration with 1 volume per cent $O_2$ in $N_2$. Characteristic for the $SO_2$ production profile is an initial $SO_2$ concentration of ± 6000 ppm, which dropped to a value of 5000 ppm or less after about 20 minutes.

Due to the regeneration of FeS and $MoS_2$ to $Fe_2O_3$ and $MoO_3$ respectively, an $SO_2$ concentration of ± 5700 ppm is expected with complete conversion of $O_2$.

The drop in the curve of Figure 3, can be explained due to the sulfur formation during the oxygen regeneration. During the experiments it appeared that a significant amount of elementary sulfur is formed.

The process and absorbent according to the present invention showed no deactivation and regeneration of the absorbent in $O_2$ at 600°C was complete whereby $SO_2$ and sulfur vapor were produced. No measurable attrition of the absorbent was observed during the ten completed absorption/regeneration cycles.

**EXAMPLE 3:**

Long term performance of the absorbent

An absorbent was used which consisted of 10 wt.-% $Fe_2O_3$ and 10 wt.-% $MoO_3$, with an atomic ratio of 1.80 supported by $Al_2O_3$. The absorbent had a particle size of about 1 mm and a specific surface of 140 $m^2/g$ (BET).

56 absorption, regeneration cycles were carried out in a single stage fluidised bed reactor. The experimental conditions are summarized in Table 2.

Table 2

| Experimental conditions example 3 | | | | | | | | | | | |
|---|---|---|---|---|---|---|---|---|---|---|---|
| | p (Mpa) | T (°C) | Gasflow L.min$^{-1}$ | Gas composition (volume per cent) | | | | | | | |
| | | | | $SO_2$ | $O_2$ | $H_2S$ | $H_2O$ | CO | $H_2$ | $CO_2$ | $N_2$ |
| Absorption | 2.0 | 350-450 | 200-230 | - | - | 0.025-0.3 | 2-10 | 60 | 30 | 2 | balance |
| Regeneration | 2.0 | 600-650 | 150-160 | 0-50 | 0-2 | - | - | - | - | - | balance |

COS was present at the entry of the absorbent bed, due to the thermodynamic equilibrium of the reaction

$$CO + H_2S \rightleftharpoons COS + H_2.$$

The absorbent was introduced into the reaction bed whereafter the temperature of the reactor was raised to the absorption temperature. Thereafter the $H_2S$ containing gas stream was introduced into the reactor. The sulphur components $H_2S$ and COS reacted with the absorbent to produce metal sulfides. Maximum absorption was indicated when breakthrough of $H_2S$ and COS was observed.

Regeneration was performed in a gas mixture containing $SO_2/O_2$ with a balance of $N_2$. The metal sulfides react with oxygen and $SO_2$ to produce metal oxides and sulphur vapor.

**Results of Example 3:**

H$_2$S absorption

During the 56 cycle programme the absorbent was kept fluidised for 850 hours of which 25% under absorption or regeneration conditions. For the remaining time the absorbent was fluidised in $N_2$ at 350°C and 0.2 MPa.

During absorption of $H_2S$, $Fe_2O_3$ and $MoO_3$ were transformed into FeS and $MoS_2$ respectively.

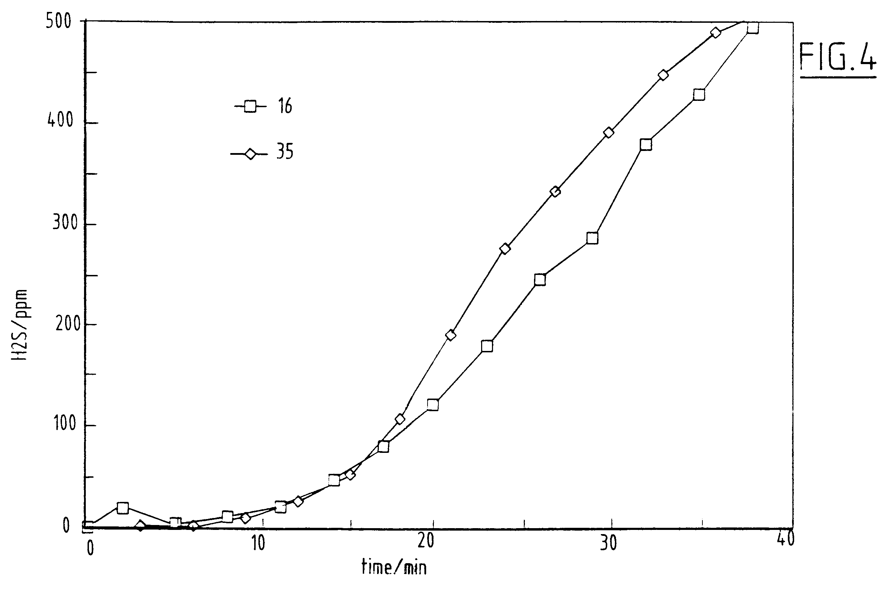

Figure 4 shows the outlet concentration of $H_2S$ as a function of time. The sulfur uptake capacity remained constant under the conditions mentioned in Table 2. No significant deactivation of the absorbent was observed.

The total sulfur uptake capacity of the absorbent after 56 cycles in the fluid bed reactor is similar to that of the fresh absorbent and amounts to 6.0 wt.-% S.

SO$_2$/O$_2$ regeneration

During regeneration in a $SO_2/O_2$ mixture the metal sulfides are converted into metal oxides and sulphur vapor. Sulphur is the only product formed.

Attrition from Experiment 3

The attrition of the absorbent during the test programme was obtained by monitoring the amount of absorbent that elutriated from the reactor and the particle size distribution of the absorbent in the reactor. Table 3 shows the cumulative elutriation as a function of the cycle number and total time of fluidisation.

From this table it was calculated, see below, that the overall rate of elutriation from the reactor amounted to approximately 0.3 wt.-%/day. Separately the attrition was measured in a 'three hole' attrition test system. The rate of elutriation for a fresh absorbent and the spent absorbent after 56 cycles in the fluid bed reactor, amounted to 0.12 and 0.15 wt.-%/day respectively.

Table 3

| Total time of fluidisation and cumulative elutriation | | |
|---|---|---|
| Cycle number | Total time of fluidisation (hours) | Cumulative elutriation (wt.-% of reactor content) |
| 15 | 140 | 0.63 |
| 25 | 360 | 2.42 |
| 35 | 600 | 5.25 |
| 43 | 650 | 6.38 |
| 56 | 850 | 10.22 |

The cumulative elutriation was calculated by dividing the weight loss from the reactor by the initial weight of sorbent loaded in the reactor.

The particle size of the elutriated fines was smaller than 170$\mu$m.

The particle size distribution of the reactor inventory after 850 hours is as follows:

| Particle size mm | % |
|---|---|
| $d_p > 0.8$ | 80 |
| $0.5 < d_p < 0.8$ | 16 |
| $d_p < 0.5$ | 4 |

Following these results it is concluded that the absorbent according to the present invention is suitable for use in a fluid bed reactor.

## Claims

1. Process for removing sulfur containing compounds such as $H_2S$ and COS from a gas stream, comprising contacting the gas stream with an absorbent in a fluidized bed, which absorbent is based on at least one oxide of a first metal selected from the group consisting of Mn, Fe, Co, Ni, Cu and Zn, in combination with at least one oxide of a second metal selected from the group consisting of Cr, Mo and W on a carrier selected from the group consisting of $Al_2O_3$, $TiO_2$, or $ZrO_2$ or mixtures thereof, said absorbent being in the form of particles, having a particle size of 0.1 - 5 mm and wherein the absorbent has a specific surface of 100-500 $m^2$/g.

2. Process according to the claim 1, wherein the sum of the metal oxides on the carrier is between 0.01 and 50 wt.-%.

3. Process according to claim 2, wherein the sum of the metal oxides on the carrier is between 10 and 30 wt.-%.

4. Process according to any of the preceding claims, wherein the loaded absorbent is regenerated with an oxidising gas stream and recirculated.

5. Process according to claim 4, wherein the gas stream comprises oxygen or a mixture of oxygen and sulfur dioxide.

6. Process according to claim 5, wherein sulfur is produced.

7. Process according to any of the preceding claims, carried out at a temperature range of between 200-700°C.

8. Process according to any of the preceding claims, carried out at a pressure of between 0.1 - 5 Mpa.

9. Absorbent suitable for absorbing sulfur compounds in a fluidized bed process according to the claims 1-8 comprising at least one oxide of a first metal selected from the group consisting of Mn, Fe, Co, Ni, Cu and Zn in combination with at least one oxide of a second metal selected from the group consisting of Cr, Mo and W on a carrier selected from the group consisting of $Al_2O_3$, $TiO_2$, or $ZrO_2$ or mixtures thereof, said absorbent being in the form of particles, having a particle size of 0.1 - 5 mm and wherein the absorbent has a specific surface of 100-500 $m^2$/g.

10. Absorbent according to claim 9, wherein the sum of the metal oxides on the carrier is between 0.01 and 50 wt.-%.

11. Absorbent according to claim 9, wherein the sum of the metal oxides on the carrier is between 10 and 30 wt.-%.

12. Process for preparing an absorbent as claimed in claims 9-11 suitable for use in a process according to the claims 1-8, comprising sequential impregnation of the first metal oxide and the second metal oxide on the carrier.

13. Process according to claim 12, wherein the impregnation of the first metal oxide is a two stage treatment.

14. Process according to claim 13, comprising the steps of calcining the carrier, impregnation under vacuum of said carrier material with a nitrate, citrate or acid solution of the first metal, calculated to yield a predetermined metal oxide content in the absorbent, at a pH of roughly less than 3,5 whereafter this step is repeated to be followed by impregnation under vacuum with a nitrate, citrate or acid solution of the second metal precalculated to yield a predetermined weight per cent in the absorbent.

15. Absorbent suitable for absorbing sulfur containing compounds such as $H_2S$ and COS from a gas stream produced by sequentially impregnating a carrier with at least one oxide of a first metal selected from the group consisting of Mn, Fe, Co, Ni, Cu and Zn and at least one oxide of a second metal selected from the group consisting of Cr, Mo, and W wherein the carrier is selected from the group consisting of $Al_2O_3$, $TiO_3$ or $ZrO_2$ or mixtures thereof and wherein the absorbent is in the form of particles, having a particle size of 0.1 - 5 mm and wherein the absorbent has a specific surface of 100-500 $m^2$/g.

16. Absorbent produced according to claim 15, wherein the impregnation of the first metal oxide is a one or two stage treatment.

FIG.1

EP 0 722 774 A1

FIG.2

FIG.3

FIG.4

EP 0 722 774 A1

European Patent
Office

**EUROPEAN SEARCH REPORT**

Application Number

EP 96 20 0112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-5 254 516 (RESEARCH TRIANGLE INSTITUTE)<br><br>* column 6, line 46 - column 7, line 46 *<br>* column 17, line 49 - column 18, line 7; claims 1-19 *<br>--- | 1-5,9, 12,13, 15,16 | B01J20/06<br>B01D53/52<br>C10K1/30<br>C10K1/32 |
| Y | US-A-4 729 889 (CALIFORNIA INSTITUTE OF TECHNOLOGY)<br><br>* claims 1-10; figure 1 *<br>--- | 1-5,9, 12,13, 15,16 | |
| A | US-A-5 045 522 (PHILLIPS PETROLEUM CO.)<br>* column 6, line 30 - column 7, line 38; claims 1-20; examples I-III *<br>--- | 1-16 | |
| A | EP-A-0 401 788 (PHILLIPS PETROLEUM CO.)<br>* column 9, line 32 - line 43 *<br>* column 12, line 51 - column 13, line 13; claims 1-21; examples I-III *<br>--- | 1-16 | |
| A | GB-A-2 191 111 (PHILLIPS PETROLEUM CO.)<br>* claims 1-30; examples *<br>----- | 1-16 | TECHNICAL FIELDS SEARCHED (Int.Cl.6)<br><br>B01J<br>B01D<br>C10K |

The present search report has been drawn up for all claims

| Place of search | Date of completion of the search | Examiner |
|---|---|---|
| THE HAGUE | 1 April 1996 | Eijkenboom, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document